# EUROPÄISCHE PATENTSCHRIFT

(11) **EP 3 093 101 B1**
(45) Veröffentlichungstag und Bekanntmachung des Hinweises auf die Patenterteilung: **15.08.2018**
(21) Anmeldenummer: 16168322.2
(22) Anmeldetag: 04.05.2016
(51) Int. Cl.: B23P 19/04

(54) **WECHSELANORDNUNG ZUR AUFNAHME EINER APPLIKATIONSVORRICHTUNG ZUM EINSATZ IN EINER MONTAGELINIE FÜR KRAFTFAHRZEUGE**
CHANGE ASSEMBLY FOR RECEIVING AN APPLICATION DEVICE FOR USE IN AN ASSEMBLY LINE FOR MOTOR VEHICLES
SYSTÈME DE CHANGEMENT DESTINÉ A LA RECEPTION D'UN DISPOSITIF D'APPLICATION DESTINÉ A ÊTRE UTILISÉ DANS UNE LIGNE DE MONTAGE DE VÉHICULES AUTOMOBILES

(30) Priorität: 12.05.2015 DE 202015003534 U
(43) Veröffentlichungstag der Anmeldung: 16.11.2016
(73) Patentinhaber: ThyssenKrupp System Engineering GmbH, 74076 Heilbronn (DE); thyssenkrupp AG, 45143 Essen (DE)
(72) Erfinder: Schillo, Carsten, 66687 Wadern (DE)
(74) Vertreter: thyssenkrupp Intellectual Property GmbH

(56) Entgegenhaltungen:
- EP-A1- 0 582 117
- EP-A1- 1 493 529
- EP-A1- 2 130 790
- EP-A1- 2 149 422
- WO-A1-2008/062033
- JP-A- H0 760 564
- JP-A- S61 235 280

## Beschreibung

Die Erfindung betrifft eine Wechselanordnung zur Aufnahme einer Applikationsvorrichtung zum Einsatz in einer Montagelinie für Kraftfahrzeuge nach dem Oberbegriff des Anspruchs 1. In Montagelinien zur Montage von Kraftfahrzeugen werden allgemein bekannte Wechselanordnungen verwendet, welche ein Wechseln einer Applikationsvorrichtung ermöglichen. Eine Möglichkeit zur Ausgestaltung solcher Wechselanordnungen ist ein an einem Drehgestell angeordneter Drehkörper. Der Drehkörper kann hierbei beispielsweise unterschiedliche Mantelteilflächen einer Mantelfläche aufweisen, wobei an einer oder mehrerer der Mantelteilflächen jeweils eine Applikationsvorrichtung angeordnet ist beziehungsweise angeordnet sein kann. Mittels Drehens des Drehkörpers um eine Drehachse kann sodann die jeweils zur Nutzung vorgesehene Applikationsvorrichtung in einer Arbeitsposition für ihren Einsatz positioniert werden.

Nach dem Drehen des Drehkörpers zur Positionierung der Applikationsvorrichtung zu einer Bearbeitungsposition ist typischerweise weiterhin eine Bewegung der Applikationsvorrichtung in einer zu der Bearbeitungsposition hingewandten Richtung erforderlich. Diese Bewegung kann beispielsweise in einer senkrecht zur Rotationsachse befindlichen Richtung vorgesehen sein. Um eine Bewegung der Applikationsvorrichtungen zu der Bearbeitungsposition hin zu gewährleisten, werden für das Tragen der Applikationsvorrichtung in bekannten Ausgestaltungen Tragebolzen genutzt, welche durch ein Führungsloch in ein Inneres des Drehkörpers hineingeführt sind und welche innerhalb des Führungslochs von dem Inneren des Drehkörpers nach außen hin- und wieder zurückführbar beweglich ausgebildet sind. In den bekannten Ausgestaltungen des Drehkörpers sind jeweils gegenüberliegend angeordnete Tragebolzen als Voll- und Hohlwelle ausgebildet, wobei die Vollwelle in die Hohlwelle hineinführbar angeordnet ist. Mittels einer solchen Anordnung kann gewährleistet werden, dass insbesondere in einer zur Drehachse parallelen Richtung möglichst geringe Ausdehnung des Drehkörpers erforderlich ist. Hierdurch wird der Vorteil erreicht, dass geringer Materialaufwand und geringe Gewichterfordernisse möglich sind, was unter anderem auch der Stabilität des Drehkörpers zu Gute kommt.

Die DE 60 2004 004 001 T2 zeigt eine Montagemaschine mit einer Anordnung von Fahrgestell-Mehrfachwerkzeughalter, mittels der die Ausrichtung des Montagewerkzeugs in Arbeitsposition über eine Betätigungseinrichtung ermöglicht werden soll.

Die JP S61 235280 A offenbart die Merkmale des Oberbegriffes des Anspruchs 1.

Die erläuterten bekannten Ausgestaltungen weisen jedoch unter anderem den Nachteil auf, dass der erwähnte Platzvorteil lediglich bei einem Drehkörper mit vier Mantelteilflächen erreicht wird. Bei einer gewünschten Ausgestaltung von mehr als vier Mantelteilflächen wird der Vorteil des geringen Höhenaufwands wieder relativiert und eine dahingehende Ausgestaltung von gegenüberliegenden Voll- und Hohlwellen würde zu einem entsprechend höheren Höhenbedarf führen.

Aufgabe der Erfindung ist daher, eine Wechselanordnung zur Aufnahme einer Applikations-vorrichtung zum Einsatz in einer Montagelinie für Kraftfahrzeuge zur Verfügung zu stellen, wobei die Wechselanordnung einen Drehkörper zur drehbaren Anordnung an einem Drehgestell zum Drehen des Drehkörpers um eine Drehachse aufweisen soll, und wobei weiterhin prinzipbedingt gegenüber der aus dem Stand der Technik bekannten Lösung eine platzsparende Konstruktion auch bei einer Anzahl von mehr als vier Mantelteilflächen möglich sein soll.

Die Aufgabe wird mit einer Wechselanordnung mit den Merkmalen des Anspruchs 1 gelöst. Vorteilhafte Ausgestaltungen der Wechselanordnung sind in den Unteransprüchen angegeben. Es ist eine Wechselanordnung zur Aufnahme einer Applikationsvorrichtung zum Einsatz in einer Montagelinie für Kraftfahrzeuge vorgeschlagen. Die Wechselanordnung weist auf:
- Einen Drehkörper zur drehbaren Anordnung an einem Drehgestell zum Drehen des Drehkörpers um eine Drehachse, mit
- einer Mantelfläche, aufweisend wenigstens eine erste Mantelteilfläche, eine zweite Mantelteilfläche, eine zwischen der ersten Mantelteilfläche und der zweiten Mantelteilfläche angeordnete dritte Mantelteilfläche und eine zwischen der zweiten Mantelteilfläche und der ersten Mantelteilfläche angeordnete vierte Mantelteilfläche, und
- einem ersten Tragebolzen zum Tragen oder Mittragen einer ersten Applikationsvor-richtung sowie weiterhin einen zweiten Tragebolzen zum Tragen oder Mittragen einer zweiten Applikationsvorrichtung.

Die erste Mantelteilfläche weist ein erstes Führungsloch zur Führung des ersten Tragebolzens auf. Die zweite Mantelteilfläche weist ein zweites Führungsloch zur Führung des zweiten Tragebolzens auf.

Das erste Führungsloch und das zweite Führungsloch sind in einer zur Drehachse parallelen Richtung zueinander versetzt angeordnet, sodass der erste Tragebolzen und der zweite Tragebolzen in einem Inneren des Drehkörpers zum kollisionsfreien Einfahren und/oder Ausfahren der Tragebolzen versetzt zueinander angeordnet sind.

Der Begriff des Führungslochs ist hierbei dahingehend zu verstehen, dass eine Durchführung in der Mantelteilfläche besteht, sodass eine Führung der Tragebolzen möglich ist. Das Führungsloch kann hierbei beispielsweise als Bohrung ausgebildet sein. Ebenso kann aber auch vorgesehen sein, dass das Führungsloch bereits während eines Urformverfahren zur Herstellung des Drehkörpers in diesen eingebracht ist.

Die Mantelteilflächen sind hierbei diejenigen Flächen des Mantels, welche insoweit eine Funktion ausüben, dass ein Führungsloch in der Mantelteilfläche angeordnet ist. Es soll dabei jedoch nicht ausgeschlossen sein, dass der Mantel zusätzlich zu Mantelteilflächen weitere Flächen, beispielweise Zwischenflächen oder Verbindungsflächen, aufweist, die beispielsweise aus gründen der Statik und/oder der Optik an dem Drehkörper ausgebildet sind.

Die erläuterte Anordnung der Mantelteilflächen ist dahingehend zu verstehen, dass in einem Umlauf des Mantels um die Drehachse die erste Mantelteilfläche, die dritte Mantelteilfläche, die zweite Mantelteilfläche und die vierte Mantelteilfläche in dieser Reihenfolge überlaufen werden. Dies schließt jedoch nicht aus, dass nicht auch weitere Mantelteilflächen oder weitere Zwischenflächen zusätzlich zwischen diesen Mantelteilflächen angeordnet sind. Die genannten Mantelteilflächen können also, müssen aber nicht unmittelbar aneinander angrenzend angeordnet sein.

Der Begriff des Winkels zwischen zwei Mantelteilflächen bezeichnet einen Winkel,
- der sich bei einem Schnitt derjenigen beiden Ebenen ergibt, in denen beide an eine andere Mantelteilfläche angrenzenden Kanten einer Mantelteilfläche liegen und
- der in einer Normalebene der Drehachse liegt.

Bei zwei ebenen Mantelteilflächen, die parallel zu der Drehachse orientiert sind, ergibt sich der Winkel als der von den beiden Mantelteilflächen eingeschlossene Winkel oder der von zwei Ebenen, in denen jeweils eine der Mantelteilflächen umfasst ist eingeschlossene Winkel.

Die vorgeschlagene Ausgestaltung des Drehkörpers hat insbesondere den Vorteil zur Folge, dass infolge der versetzten Anordnung der Tragebolzen zueinander eine kollisionsfreie Bewegung der Tragebolzen zueinander möglich ist. Dies ist eine unmittelbare Folge der in einer zur Drehachse parallelen Richtung versetzten Anordnung. Aufgrund der jeweils versetzten Anordnung ergibt sich des Weiteren der Vorteil, dass die aus dem Stand der Technik bekannte komplexe Konstruktion unter Nutzung unterschiedlicher Wellen, insbesondere von Hohlwellen und Vollwellen, welche ineinander verschiebbar sind, nicht mehr erforderlich ist. Hierdurch ist die Komplexität des vorgeschlagenen Drehkörpers gegenüber der aus dem Stand der Technik bekannten Ausgestaltungen deutlich verringert.

In einer Ausbildung der Wechselanordnung kann vorgesehen sein, dass die erste Mantelteilfläche, die zweite Mantelteilfläche, die dritte Mantelteilfläche und/oder die vierte Mantelteilfläche parallel zu der Drehachse orientiert ist.

In einer Ausgestaltung der Wechselanordnung kann vorgesehen sein, dass die erste Mantelteilfläche der zweiten Mantelteilfläche gegenüberliegend angeordnet ist und/oder die dritte Mantelteilfläche der vierten Mantelteilfläche gegenüberliegend angeordnet ist.

Eine Spezialform dieser Ausgestaltung ist eine Ausbildung der Wechselanordnung als Quader mit rechteckiger Grundkante, der den Vorteil eines besonders einfachen Aufbaus und hoher Symmetrie bietet.

Erfindungsgemäß ist vorgesehen, dass die erste Mantelteilfläche parallel zu der zweiten Mantelteilfläche orientiert ist und dass die dritte Mantelteilfläche parallel zu der vierten Mantelteilfläche orientiert ist.

In einer Ausgestaltung der Wechselanordnung kann beispielsweise vorgesehen sein, dass der erste Tragebolzen und/oder der zweite Tragebolzen als Kugelnutwelle ausgebildet ist.

Eine Nutzung von Kugelnutwellen als Tragebolzen hat hierbei insbesondere den Vorteil, dass die hohe radiale Tragfähigkeit der Kugelnutwellen vorteilhaft in der Positionierung der Applikationsvorrichtungen sind, und gleichzeitig als Folge der weitgehenden Winkelspielfreiheit eine sehr exakte Positionierung der Applikationsvorrichtung, insbesondere in einer zur Drehachse parallelen Richtung, erreicht werden kann. Dabei ist eine hohe Steifigkeit der Kugelnutwellen gegenüber Torsionsbelastungen und Momenten als Vorteil insbesondere bei ausgefahrenen Tragebolzen und hohen Tragebelastungen gegeben. Neben diesen Vorteilen ergibt sich des Weiteren der Vorteil der einfachen Montage, sodass die Komplexität des Drehkörpers weiter verringert ist.

In einer beispielhaften Ausgestaltung der Wechselanordnung kann vorgesehen sein, dass die Mantelteilflächen einen Mantel eines Prismas beschreiben.

Insbesondere kann beispielsweise vorgesehen sein, dass die Mantelteilflächen einen Mantel eines regelmäßigen Prismas beschreiben. Eine Beschreibung eines regelmäßigen Prismas durch die Mantelteilflächen des Mantels hat unter anderem den Vorteil, dass die zu tragenden Applikationsvorrichtungen bei gleichmäßiger Gewichtsverteilung angeordnet werden, wodurch sich unter anderem auch eine längere Lebensdauer der Wechselanordnung bzw. der einzelnen Bauteile der Wechselanordnung ergibt.

Die erläuterte Beschreibung eines Mantels eines Prismas durch die Mantelteilflächen setzt hierbei nicht voraus, dass der Drehkörper als geschlossener Körper vorgesehen ist; vielmehr kann vorgesehen sein, dass ausschließlich der Mantel, oder aber der Mantel mit einigen die Stabilität der Drehanordnung erhöhenden Verbindungselementen, vorgesehen ist.

In einer weiteren Ausgestaltung der Wechselanordnung kann beispielsweise vorgesehen sein, dass eine erste Mantelflächenkante und/oder eine zweite Mantelflächenkante ein regelmäßiges Vieleck umschreiben. In speziellen Ausgestaltungen umschreiben die erste Mantelteilflächenkante und die zweite Mantelteilflächenkante ein gleiches regelmäßiges Vieleck. In einem solchen Fall kann die Wechselanordnung vorteilhafterweise auf einer Gestalt eines regelmäßigen Prismas basieren.

In einer Ausgestaltung der Wechselanordnung ist vorgesehen, dass der Drehkörper vier oder sechs Mantelteilflächen aufweist.

In einer weiteren speziellen Ausgestaltung der Wechselanordnung kann insbesondere vorgesehen sein, dass der Drehkörper einen Quader mit rechteckiger Grundfläche oder ein regelmäßiges Hexagon umschreibt. Der Begriff des Umschreibens des Quaders bzw. des Hexagons bezieht sich hierbei darauf, dass der Drehkörper keinen vollständigen Quader bzw. kein vollständiges Hexagon darstellen muss, sondern lediglich Teile eines Quaders und/oder Hexagons aufweisen muss beziehungsweise auf diesen Grundformen basiert. Insbesondere kann hierbei vorgesehen sein, dass, wie eingangs erläutert, die Mantelflächen einen Mantel eines Prismas mit rechteckiger Grundfläche oder eines regelmäßigen Hexagons umschreiben.

Gleichwohl können auch weniger symmetrische Ausbildungen vorgesehen sein. So kann auch ein Umschreiben regelmäßiger Vielecke mit ungerader Kantenanzahl vorgesehen sein, beispielsweise ein Umschreiben eines Pentagons oder eines Septagons.
Auch ein Umschreiben unregelmäßiger Vielecke mit gerader oder ungerader Kantenanzahl kann vorgesehen sein.

In einer weiteren beispielhaften Ausgestaltung der Wechselanordnung kann vorgesehen sein, dass wenigstens die erste Mantelteilfläche und die zweite Mantelteilfläche identisch ausgebildet sind. In einer speziellen Ausgestaltung der Wechselanordnung kann weiterhin vorgesehen sein, dass alle Mantelteilflächen identisch ausgebildet sind. Ein identisches Ausbilden aller Mantelteilflächen hat insbesondere den Vorteil zur Folge, dass neben den Vorteilen der wirtschaftlicheren Konstruktion aufgrund der geringeren Komplexität ein Anordnen einer gleichen Applikationsvorrichtung an jede der Mantelteilflächen möglich wird. Ein Fertigungsverfahren zum Fertigen der Wechselanordnung kann somit in besonders effizienter Ausführung vorgenommen werden.

In einer weiteren vorteilhaften Ausgestaltung der Wechselanordnung ist vorgesehen, dass eine der Mantelteilflächen als Rechteck ausgebildet ist.

Zweckmäßigerweise kann eine Ausbildung der Wechselanordnung zwei Führungslöcher aufweisen, wobei die Verbindung der Mittelpunkte der zwei Führungslöcher einen Winkel von weniger 20 Grad mit einer Diagonalen der Mantelteilfläche einschließt. Der Begriff des Mittelpunkts soll allerdings nicht notwendigerweise implizieren, dass die Führungslöcher einen kreisförmigen Querschnitt aufweisen; ebenso kann beispielsweise vorgesehen sein, dass der Begriff des Mittelpunkts als Schwerpunkt interpretiert wird, wobei der Schwerpunkt als der geometrische Schwerpunkt eines Querschnitts des Führungslochs verstanden wird. Die betrachtete Diagonale der Mantelteilflächen kann insbesondere als eine Gerade ausgebildet sein, welche zwei weitest entfernte Punkte einer Mantelteilfläche miteinander verbindet. Die diagonale Anordnung der Führungslöcher führt unmittelbar zu einer dahingehenden Anordnung zweier nächster Führungslöcher, dass diese in zur Drehachse paralleler Richtung versetzt zueinander positioniert sind. Hierdurch ergibt sich der Vorteil einer besonders einfachen und daher kostengünstig herstellbaren Ausgestaltung des Drehkörpers und hierdurch der Wechselanordnung.
Eine weitere mögliche Ausgestaltung der Wechselanordnung kann vorsehen, dass der Drehkörper wenigstens teilweise aus Aluminiumguss besteht. In einer besonders bevorzugten Ausgestaltung ist der Drehkörper einteilig und vollständig aus einem Aluminiumguss hergestellt. Eine Herstellung des Drehkörpers aus Aluminiumguss oder zumindest teilweise aus Aluminiumguss weist den Vorteil auf, dass die vorteilhaften Materialeigenschaften vergleichsweise hoher Härte bei guter Vibrationsabsorption und Zähigkeit und weiterhin noch guter Zerspanbarkeit in kombinierter Weise genutzt werden. Hierdurch wird insbesondere auch bewirkt, dass optional, sofern gewünscht, eine Herstellung der Führungslöcher mittels Bohrens möglich ist.
Beispielsweise kann vorgesehen sein, den Drehkörper unter Nutzung der Gusslegierung EN AC-AL-Si9Cu3 herzustellen.
In einer weiteren vorteilhaften Ausgestaltung der Wechselanordnung kann vorgesehen sein, dass die Wechselanordnung in einer Kombination besonders vorteilhafter der bereits erläuterten Ausgestaltungen einen Drehkörper aufweist, der sechs gleiche Mantelteilflächen aufweist, welche eine regelmäßige hexagonale Grundfläche umschreiben. Es kann vorgesehen sein, dass jede der Mantelteilflächen eine Länge zwischen 850mm und 1000mm sowie eine Höhe zwischen 390mm und 420mm aufweist.

Im Folgenden werden konkrete Ausgestaltungen der Erfindung mit Bezugnahme auf die Figuren im Detail erläutert. Die Figuren sind wie die begleitende Beschreibung der resultierenden Merkmale nicht beschränkend auf die jeweiligen Ausgestaltungen zu lesen, sondern dienen der Illustration beispielhafter Ausgestaltungen. Weiterhin können die jeweiligen Merkmale untereinander wie auch mit Merkmalen der obigen Beschreibung genutzt werden für eine mögliche Fortentwicklung und Verbesserung der Erfindung, speziell bei weiteren und unterschiedlichen Ausgestaltungen, die nicht dargestellt sind.
Die Figuren zeigen:
- Fig. 1:: Beispielhafte Ausgestaltung einer Wechselanordnung zur Aufnahme einer Applikationsvorrichtung;
- Fig. 2:: Drehkörper gemäß Stand der Technik;
- Fig. 3:: beispielhafte Ausgestaltung eines Drehkörpers;
- Fig. 4:: weitere beispielhafte Ausgestaltung eines Drehkörpers in Seitendarstellung;
- Fig. 5:: Draufsicht der Ausgestaltung des Drehkörpers der Fig. 4;
- Fig. 6:: Perspektivische Schrägansicht der Ausgestaltung des Drehkörpers der Fig. 4.

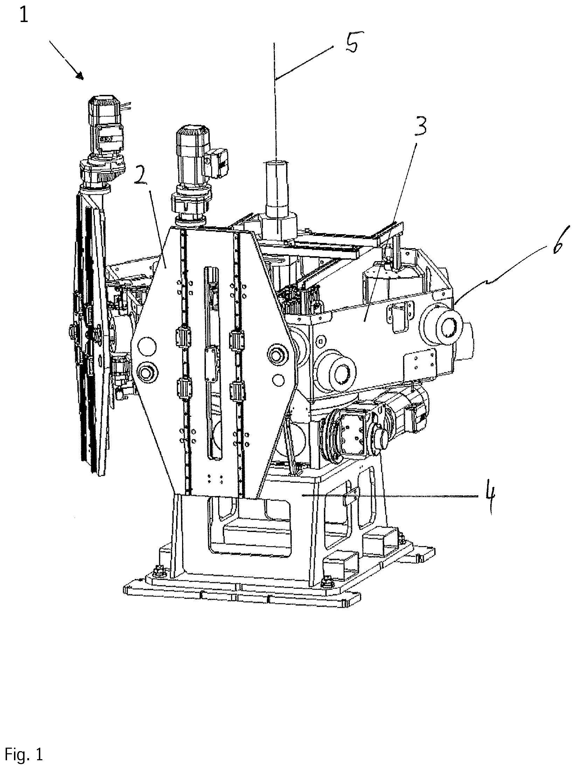

Fig. 1 ist eine beispielhafte Ausgestaltung einer Wechselanordnung 1 zu entnehmen. Die Wechselanordnung 1 weist einen Drehkörper 3 auf, welcher an einem Drehgestell 4 um seine Drehachse 5 drehbar angeordnet ist. An dem Drehkörper 3 sind Applikationsvorrichtungen 2 angeordnet. Die Applikationsvorrichtungen 2 können mittels Tragebolzen zu einer Bearbeitungsstation hin und von dieser weg bewegt werden; mittels des Drehens des Drehkörpers 3 um die Drehachse 5 ist der Wechsel der Applikationsvorrichtung 2 möglich.

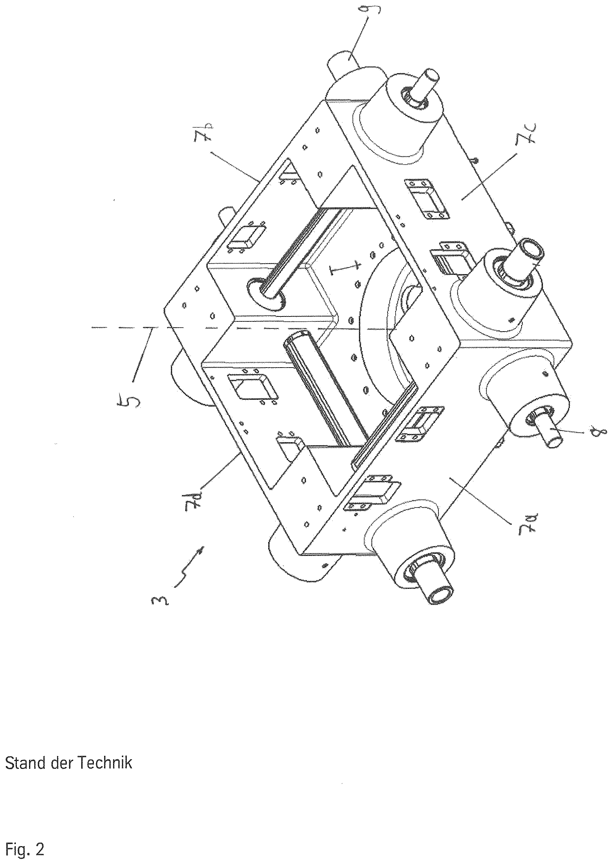

Fig. 2 ist eine Ausgestaltung eines Drehkörpers 3 in einer aus dem Stand der Technik bekannten Konstruktionsweise dargestellt. Der Drehkörper 3 weist eine erste Mantelteilfläche 7a, eine zweite Mantelteilfläche 7b, eine dritte Mantelteilfläche 7c sowie eine vierte Mantelteilfläche 7d auf. Die Mantelteilflächen 7a bis 7d sind in ihrer Gesamtheit Bestandteil einer Mantelfläche des Drehkörpers 3. Alle Mantelteilflächen sind in der dargestellten Ausgestaltung identisch ausgebildet. Der Drehkörper 3 umschreibt einen Quader mit rechteckiger Grundfläche, wobei entsprechend des eingangs erläuterten Verständnisses die Führungslöcher, unter anderem Führungslöcher 8 und 9, sowie die um die Führungslöcher 8, 9 angeordneten Erhebungen nicht der Vorstellung des Drehkörpers als einen Quader umschreibend entgegenstehen. Jede Mantelteilfläche 7a, 7b, 7c, 7d weist zwei Führungslöcher auf, wobei in jedes Führungsloch ein Tragebolzen 8, 9 eingeführt ist. Die erste Mantelteilfläche 7a weist unter anderem einen ersten Tragebolzen 8 auf; die zweite Mantelfläche 7b weist einen zweiten Tragebolzen 9 auf. Der erste Tragebolzen 8 und der zweite Tragebolzen 9 sind hierbei im Fall des Tragebolzens 8 als Vollwelle sowie im Fall des Tragebolzens 9 als Hohlwelle ausgebildet. Tragebolzen 8 und Tragebolzen 9 sind ineinander verschiebbar ausgebildet, sodass ein Einfahren beider Bolzen gleichzeitig möglich ist.

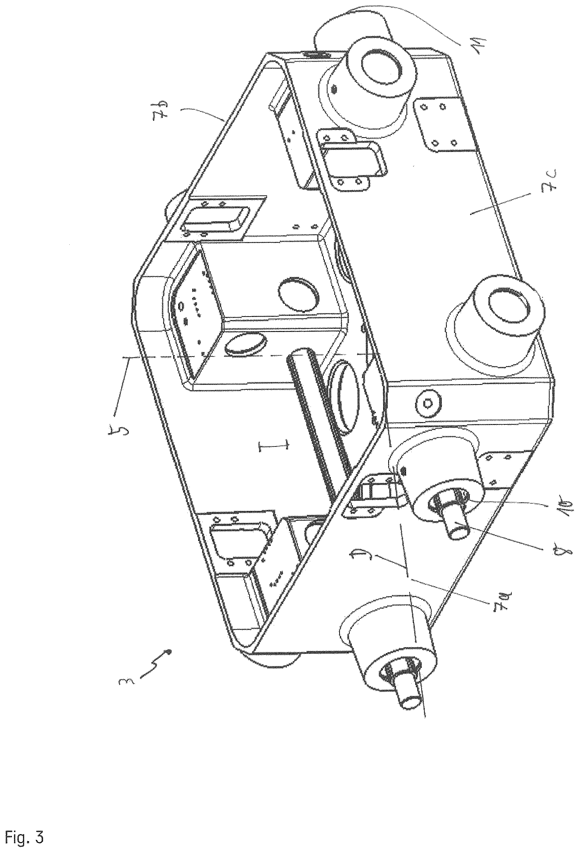

Fig. 3 ist eine Ausgestaltung eines Drehkörpers zu entnehmen, in der ebenfalls die vier Man-telflächen 7a, 7b, 7c sowie 7d (letztere in Fig. 3 nicht dargestellt) eine Mantelfläche eines Quaders mit rechteckiger Grundfläche umschreiben. Im Gegensatz zu dem der Fig. 2 zu entnehmenden Beispiel aus dem Stand der Technik weist das der Fig. 3 zu entnehmende Aus-führungsbeispiel ein erstes Führungsloch 10 auf, in welchem ein erster Tragebolzen eingeführt ist sowie ein zweites Führungsloch 11 auf, wobei das erste Führungsloch und das zweite Führungsloch in einer zur Drehachse parallelen Richtung zueinander versetzt angeordnet sind. Der erste Tragebolzen 8 und der zweite Tragebolzen 9 sind in dem Inneren des Drehkörpers für ein kollisionsfreies Einfahren und Ausfahren der Tragebolzen versetzt zueinander angeordnet. In dem dargestellten Ausführungsbeispiel sind insbesondere auch die erste Mantelteilfläche 7a, die zweite Mantelteilfläche 7b, die dritte Mantelteilfläche 7c sowie die vierte Mantelteilfläche 7d identisch ausgebildet. Die Mantelteilflächen 7a, 7b, 7c und 7d sind als Rechteck ausgebildet. Jede der Mantelteilflächen 7a, 7b, 7c, 7d weist zwei Führungslöcher auf, wobei die Verbindung der Mittelpunkte der zwei Führungslöcher einer Mantelteilfläche einen Winkel von weniger als 20° mit einer Diagonalen der Mantelteilfläche einschließt, wobei als Diagonale hierbei beispielsweise die Diagonale D als Beispiel zur Erläuterung dargestellt ist.

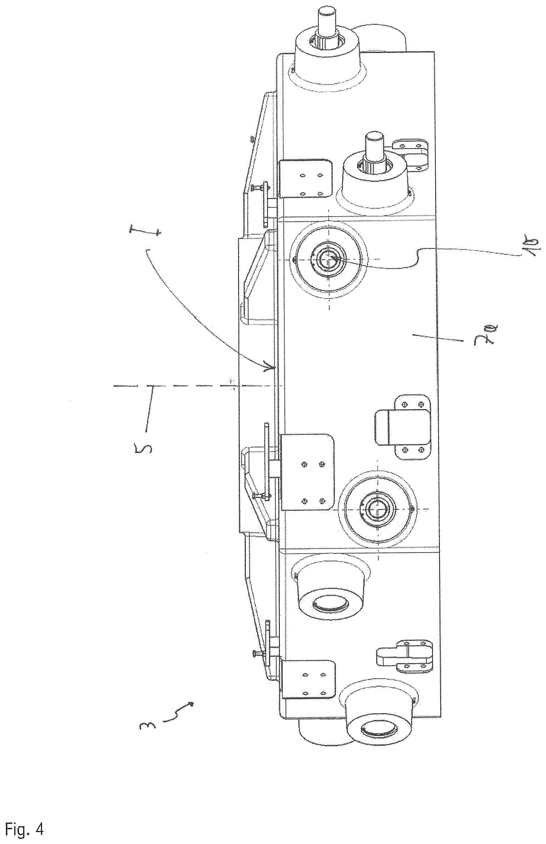

In einer weiteren Ausgestaltung, welche der Fig. 4 zu entnehmen ist, ist eine Ausbildung des Drehkörpers mit einem regelmäßigen Hexagon als Grundfläche in einer Seitendarstellung dargestellt.

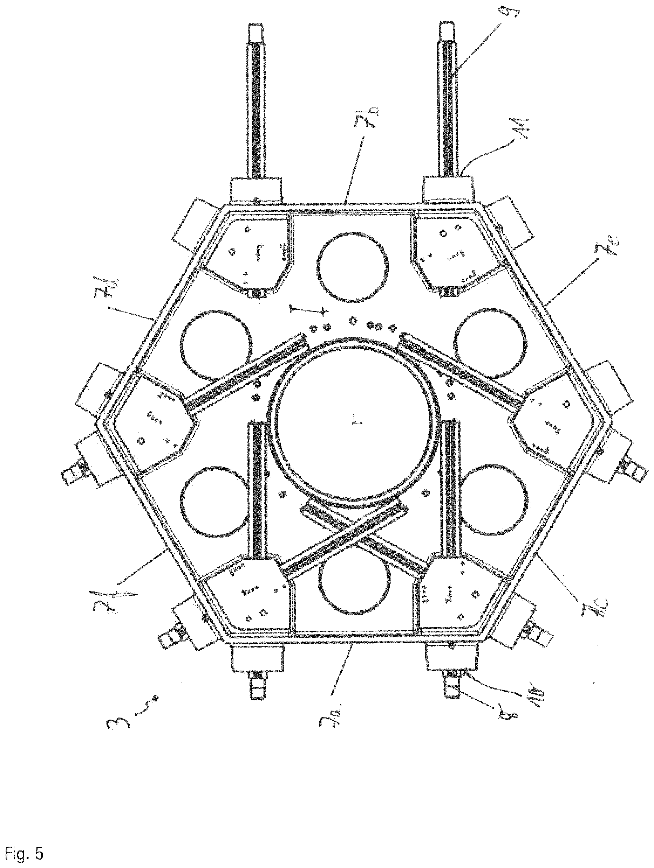

Der Fig. 5 ist die in Fig. 4 gezeigte Darstellung eines Drehkörpers als Aufsicht zu entnehmen, wobei der Fig. 5 gut zu entnehmen ist, dass die erste Mantelteilfläche 7a sowie die zweite Mantelteilfläche 7b ebenfalls das erste Führungsloch 10 mit dem ersten Tragebolzen 8 bzw. das zweite Führungsloch 11 mit dem zweiten Tragebolzen 9 aufweisen, welche einander überlappend ausgebildet sind.

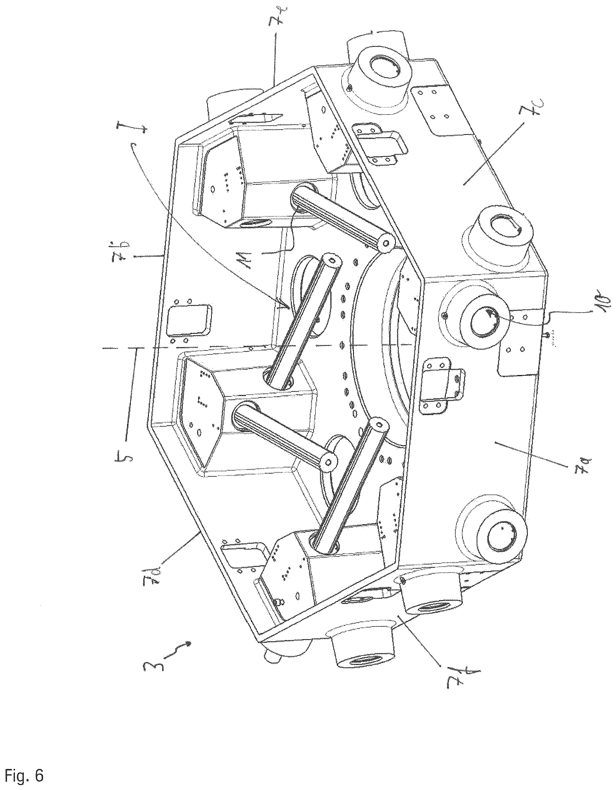

Die Möglichkeit des einander Überlappens ist besser noch der perspektivischen Schrägansicht der Fig. 6 zu entnehmen, wobei der Fig. 6 insbesondere zu entnehmen ist, dass das erste Führungsloch 10 sowie das zweite Führungsloch 11 in einer zur Drehachse parallelen Richtung zueinander versetzt angeordnet sind und in der Folge der erste Tragebolzen 8 und der zweite Tragebolzen 9 in einem Inneren I des Drehkörpers zum kollisionsfreien Einfahren und Ausfahren der Tragebolzen 8, 9 zueinander versetzt angeordnet sind.

Aufgrund der identischen Ausgestaltung der Mantelteilflächen sind insbesondere auch zwei benachbarte Führungslöcher, wie beispielsweise die beiden benachbarten Führungslöcher der Mantelteilfläche 7a sowie der Mantelteilfläche 7c, zueinander in einer zur Drehachse parallelen Richtung versetzt angeordnet, sodass auch hier eine kollisionsfreie Ein- und Ausfahrbewegung ermöglicht ist, wie auch der Übersichtsdarstellung in der Aufsicht der Fig. 5 zu entnehmen ist.

## Patentansprüche

1. Wechselanordnung (1) zur Aufnahme einer Applikationsvorrichtung (2) zum Einsatz in einer Montagelinie für Kraftfahrzeuge, wobei die Wechselanordnung (1) aufweist:
einen Drehkörper (3) zur drehbaren Anordnung an einem Drehgestell (4) zum Drehen des Drehkörpers (3) um eine Drehachse (5), mit
einer Mantelfläche (6), aufweisend wenigstens eine erste Mantelteilfläche (7a), eine zweite Mantelteilfläche (7b), eine zwischen der ersten Mantelteilfläche und der zweiten Mantelteilfläche angeordnete dritte Mantelteilfläche (7c) und eine zwischen der zweiten Mantelteilfläche und der ersten Mantelteilfläche angeordnete vierte Mantelteilfläche (7d),
wobei die erste Mantelteilfläche (7a) parallel zu der zweiten Mantelteilfläche (7b) und die dritte Mantelteilfläche (7c) parallel zu der vierten Mantelteilfläche (7d) orientiert ist, **gekennzeichnet durch** einen ersten Tragebolzen (8) zum Tragen oder Mittragen einer ersten Applikationsvorrichtung (2) sowie weiterhin einen zweiten Tragebolzen (9) zum Tragen oder Mittragen einer zweiten Applikationsvorrichtung,
wobei die erste Mantelteilfläche (7a) ein erstes Führungsloch (10) zur Führung des ersten Tragebolzens (8) und die zweite Mantelteilfläche (7b) ein zweites Führungsloch (11) zur Führung des zweiten Tragebolzens (9) aufweist, und wobei
das erste Führungsloch (10) und das zweite Führungsloch (11) in einer zur Drehachse (5) parallelen Richtung zueinander versetzt angeordnet sind sodass der erste Tragebolzen (8) und der zweite Tragebolzen (9) in einem Inneren (I) des Drehkörpers (3) zum kollisionsfreien Einfahren und Ausfahren der Tragebolzen (8, 9) versetzt zueinander angeordnet sind.

2. Wechselanordnung (1) nach Anspruch 1, **dadurch gekennzeichnet, dass** die erste Mantelteilfläche (7a) der zweiten Mantelteilfläche (7b) gegenüberliegend angeordnet ist und/oder die dritte Mantelteilfläche (7c) der vierten Mantelteilfläche (7d) gegenüberliegend angeordnet ist.

3. Wechselanordnung (1) nach einem der vorhergehenden Ansprüche, **dadurch gekennzeichnet, dass** die erste Mantelteilfläche (7a), die zweite Mantelteilfläche (7b), die dritte Mantelteilfläche (7c) und/oder die vierte Mantelteilfläche (7d) parallel zu der Drehachse orientiert ist.

4. Wechselanordnung (1) nach einem der vorhergehenden Ansprüche, **dadurch gekennzeichnet, dass** der erste Tragebolzen (8) und/oder der zweite Tragebolzen (9) als Kugelnutwelle ausgebildet ist.

5. Wechselanordnung (1) nach einem der vorhergehenden Ansprüche, **dadurch gekennzeichnet, dass** eine erste Mantelflächenkante und/oder eine zweite Mantelflächenkante ein regelmäßiges Vieleck umschreiben.

6. Wechselanordnung (1) nach einem der vorhergehenden Ansprüche, **dadurch gekennzeichnet, dass** die Mantelteilflächen (7a, 7b, 7c, 7d) einen Mantel eines Prismas beschreiben.

7. Wechselanordnung (1) nach einem der vorhergehenden Ansprüche, **dadurch gekennzeichnet dass** der Drehkörper (3) vier oder sechs Mantelteilflächen (7a, 7b, 7c, 7d, 7e, 7f) aufweist.

8. Wechselanordnung (1) nach Anspruch 7, **dadurch gekennzeichnet, dass** der Drehkörper (3) einen Quader mit quadratischer Grundfläche oder ein regelmäßiges Hexagon umschreibt.

9. Wechselanordnung (1) nach einem der vorhergehenden Ansprüche, **dadurch gekennzeichnet dass** wenigstens die erste Mantelteilfläche (7a) und die zweite Mantelteilfläche (7b) identisch ausgebildet sind.

10. Wechselanordnung (1) nach einem der vorhergehenden Ansprüche, **dadurch gekennzeichnet dass** alle Mantelteilflächen (7a, 7b, 7c, 7d) identisch ausgebildet sind.

11. Wechselanordnung (1) nach einem der vorhergehenden Ansprüche, **dadurch gekennzeichnet dass** eine der Mantelteilflächen (7a, 7b, 7c, 7d) als Rechteck ausgebildet ist.

12. Wechselanordnung (1) nach einem der vorhergehenden Ansprüche, **dadurch gekennzeichnet dass** eine der Mantelteilflächen (7a, 7b, 7c, 7d) zwei Führungslöcher (10, 11) aufweist, wobei die Verbindung der Mittelpunkte der zwei Führungslöcher einen Winkel von weniger als 20 Grad mit einer Diagonalen (D) der Mantelteilfläche (7a, 7b, 7c, 7d) einschließt.

13. Wechselanordnung (1) nach einem der vorhergehenden Ansprüche, **dadurch gekennzeichnet, dass** der Drehkörper (3) wenigstens teilweise aus Aluminiumguss besteht.

14. Wechselanordnung (1) nach einem der vorhergehenden Ansprüche, **dadurch gekennzeichnet, dass** der Drehkörper (3) einteilig ist und vollständig aus Aluminiumguss besteht.

15. Wechselanordnung (1) nach einem der vorhergehenden Ansprüche, **dadurch gekennzeichnet, dass** der Drehkörper (3) eine Mantelfläche (6) eines Prismas mit einer regelmäßig hexagonalen Grundfläche aufweist, wobei die Mantelfläche (6) sechs gleiche Mantelteilflächen (7a, 7b, 7c, 7d, 7e, 7f) aufweist, und wobei jede der Mantelteilflächen (7a, 7b, 7c, 7d, 7e, 7f) eine Länge zwischen 840mm und 860mm und/oder eine Höhe zwischen 390mm und 420mm aufweist.

## Claims

1. Change assembly (1) for receiving an application device (2) for use in an assembly line for motor vehicles, wherein the change assembly (1) comprises:
a rotary body (3) for the rotatable arrangement on a bogie (4) for rotating the rotary body (3) about an axis of rotation (5), with
a lateral surface (6), comprising at least one first partial lateral surface (7a), a second partial lateral surface (7b), a third partial lateral surface (7c) arranged between the first partial lateral surface and the second partial lateral surface, and a fourth partial lateral surface (7d) arranged between the second partial lateral surface and the first partial lateral surface,
wherein the first partial lateral surface (7a) is oriented parallel to the second partial lateral surface (7b) and the third partial lateral surface (7c) is oriented parallel to the fourth partial lateral surface (7d),
**characterized by** a first carrying bolt (8) for carrying or helping to carry a first application device (2), and further by a second carrying bolt (9) for carrying or helping to carry a second application device,
wherein the first partial lateral surface (7a) comprises a first guide hole (10) for guiding the first carrying bolt (8) and the second partial lateral surface (7b) comprises a second guide hole (11) for guiding the second carrying bolt (9), and wherein
the first guide hole (10) and the second guide hole (11) are arranged offset with respect to each other in a direction parallel to the axis of rotation (5) such that the first carrying bolt (8) and the second carrying bolt (9) are arranged offset with respect to each other in an interior (I) of the rotary body (3) for the collision-free retraction and extension of the carrying bolts (8, 9).

2. Change assembly (1) according to Claim 1, **characterized in that** the first partial lateral surface (7a) is arranged lying opposite the second partial lateral surface (7b) and/or the third partial lateral surface (7c) is arranged lying opposite the fourth partial lateral surface (7d).

3. Change assembly (1) according to either of the preceding claims, **characterized in that** the first partial lateral surface (7a), the second partial lateral surface (7b), the third partial lateral surface (7c) and/or the fourth partial lateral surface (7d) are/is oriented parallel to the axis of rotation.

4. Change assembly (1) according to one of the preceding claims, **characterized in that** the first carrying bolt (8) and/or the second carrying bolt (9) are/is designed as a ball spline shaft.

5. Change assembly (1) according to one of the preceding claims, **characterized in that** a first lateral surface edge and/or a second lateral surface edge describe/describes a regular polygon.

6. Change assembly (1) according to one of the preceding claims, **characterized in that** the partial lateral surfaces (7a, 7b, 7c, 7d) describe a side of a prism.

7. Change assembly (1) according to one of the preceding claims, **characterized in that** the rotary body (3) comprises four or six partial lateral surfaces (7a, 7b, 7c, 7d, 7e, 7f).

8. Change assembly (1) according to Claim 7, **characterized in that** the rotary body (3) describes a cuboid with a square base or a regular hexagon.

9. Change assembly (1) according to one of the preceding claims, **characterized in that** at least the first partial lateral surface (7a) and the second partial lateral surface (7b) are of identical design.

10. Change assembly (1) according to one of the preceding claims, **characterized in that** all of the partial lateral surfaces (7a, 7b, 7c, 7d) are of identical design.

11. Change assembly (1) according to one of the preceding claims, **characterized in that** one of the partial lateral surfaces (7a, 7b, 7c, 7d) is designed as a rectangle.

12. Change assembly (1) according to one of the preceding claims, **characterized in that** one of the partial lateral surfaces (7a, 7b, 7c, 7d) has two guide holes (10, 11), wherein the connection of the centre points of the two guide holes encloses an angle of less than 20 degrees with a diagonal (D) of the partial lateral surface (7a, 7b, 7c, 7d).

13. Change assembly (1) according to one of the preceding claims, **characterized in that** the rotary body (3) is at least partially composed of cast aluminium.

14. Change assembly (1) according to one of the preceding claims, **characterized in that** the rotary body (3) is in one part and is completely composed of cast aluminium.

15. Change assembly (1) according to one of the preceding claims, **characterized in that** the rotary body (3) comprises a lateral surface (6) of a prism with a regularly hexagonal base, wherein the lateral surface (6) comprises six identical partial lateral surfaces (7a, 7b, 7c, 7d, 7e, 7f), and wherein each of the partial lateral surfaces (7a, 7b, 7c, 7d, 7e, 7f) comprises a length of between 840 mm and 860 mm and/or a height of between 390 mm and 420 mm.

## Revendications

1. Système de changement (1) destiné à la réception d'un dispositif d'application (2) destiné à être utilisé dans une ligne de montage de véhicules automobiles, dans lequel le système de changement (1) présente:
un corps rotatif (3) pour l'agencement rotatif sur un bâti rotatif (4) afin de faire tourner le corps rotatif (3) autour d'un axe de rotation (5), avec
une surface latérale (6), présentant au moins une première surface latérale partielle (7a), une deuxième surface latérale partielle (7b), une troisième surface latérale partielle (7c) disposée entre la première surface latérale partielle et la deuxième surface latérale partielle et une quatrième surface latérale partielle (7d) disposée entre la deuxième surface latérale partielle et la première surface latérale partielle,
dans lequel la première surface latérale partielle (7a) est orientée parallèlement à la deuxième surface latérale partielle (7b) et la troisième surface latérale partielle (7c) est orientée parallèlement à la quatrième surface latérale partielle (7d),
**caractérisé par** un premier axe de support (8) destiné à porter ou soutenir un premier dispositif d'application (2) ainsi qu'en outre un deuxième axe de support (9) destiné à porter ou à soutenir un deuxième dispositif d'application,
dans lequel la première surface latérale partielle (7a) présente un premier trou de guidage (10) destiné à guider le premier axe de support (8) et la deuxième surface latérale partielle (7b) présente un deuxième trou de guidage (11) destiné à guider le deuxième axe de support (9), et
dans lequel le premier trou de guidage (10) et le deuxième trou de guidage (11) sont disposés en décalage l'un par rapport à l'autre dans une direction parallèle à l'axe de rotation (5), de telle manière que le premier axe de support (8) et le deuxième axe de support (9) soient disposés en décalage l'un par rapport à l'autre à l'intérieur (I) du corps rotatif (3) afin d'introduire et de retirer sans collision les axes de support (8, 9).

2. Système de changement (1) selon la revendication 1, **caractérisé en ce que** la première surface latérale partielle (7a) est disposée en face de la deuxième surface latérale partielle (7b) et/ou la troisième surface latérale partielle (7c) est disposée en face de la quatrième surface latérale partielle (7d).

3. Système de changement (1) selon l'une quelconque des revendications précédentes, **caractérisé en ce que** la première surface latérale partielle (7a), la deuxième surface latérale partielle (7b), la troisième surface latérale partielle (7c) et/ou la quatrième surface latérale partielle (7d) est orientée parallèlement à l'axe de rotation.

4. Système de changement (1) selon l'une quelconque des revendications précédentes, **caractérisé en ce que** le premier axe de support (8) et/ou le deuxième axe de support (9) est formé par un arbre cannelé à billes.

5. Système de changement (1) selon l'une quelconque des revendications précédentes, **caractérisé en ce qu'**un premier bord de surface latérale et/ou un deuxième bord de surface latérale encadrent un polygone régulier.

6. Système de changement (1) selon l'une quelconque des revendications précédentes, **caractérisé en ce que** les surfaces latérales partielles (7a, 7b, 7c, 7d) décrivent une enveloppe d'un prisme.

7. Système de changement (1) selon l'une quelconque des revendications précédentes, **caractérisé en ce que** le corps rotatif (3) présente quatre ou six surfaces latérales partielles (7a, 7b, 7c, 7d, 7e, 7f)

8. Système de changement (1) selon la revendication 7, **caractérisé en ce que** le corps rotatif (3) définit un parallélépipède avec une base carrée ou un hexagone régulier.

9. Système de changement (1) selon l'une quelconque des revendications précédentes, **caractérisé en ce qu'**au moins la première surface latérale partielle (7a) et la deuxième surface latérale partielle (7b) sont de forme identique.

10. Système de changement (1) selon l'une quelconque des revendications précédentes, **caractérisé en ce que** toutes les surfaces latérales partielles (7a, 7b, 7c, 7d) sont de forme identique.

11. Système de changement (1) selon l'une quelconque des revendications précédentes, **caractérisé en ce qu'**une des surfaces latérales partielles (7a, 7b, 7c, 7d) est réalisée en forme de rectangle.

12. Système de changement (1) selon l'une quelconque des revendications précédentes, **caractérisé en ce qu'**une des surfaces latérales partielles (7a, 7b, 7c, 7d) présente deux trous de guidage (10, 11), dans lequel la jonction des points centraux des deux trous de guidage forme un angle de moins de 20 degrés avec une diagonale (D) de la surface latérale partielle (7a, 7b, 7c 7d).

13. Système de changement (1) selon l'une quelconque des revendications précédentes, **caractérisé en ce que** le corps rotatif (3) est constitué au moins en partie d'aluminium coulé.

14. Système de changement (1) selon l'une quelconque des revendications précédentes, **caractérisé en ce que** le corps rotatif (3) est en une seule pièce et est entièrement constitué d'aluminium coulé.

15. Système de changement (1) selon l'une quelconque des revendications précédentes, **caractérisé en ce que** le corps rotatif (3) présente une surface latérale (6) d'un prisme avec une base hexagonale régulière, dans lequel la surface latérale (6) présente six surfaces latérales partielles identiques (7a, 7b, 7c, 7d, 7e, 7f), et dans lequel chacune des surfaces latérales partielles (7a, 7b, 7c, 7d, 7e, 7f) présente une longueur comprise entre 840 mm et 860 mm et/ou une hauteur comprise entre 390 mm et 420 mm.
